# EUROPEAN PATENT APPLICATION

(11) **EP 4 637 083 A1**
(43) Date of publication of application: **22.10.2025**
(21) Application number: 24171362.7
(22) Date of filing: 19.04.2024
(51) Int. Cl.: H04L 12/18

(54) **METHOD FOR ELIMINATING DIGITAL SIGNING DELAYS IN ONLINE CONFERENCES**

(71) Applicant: Unify Beteiligungsverwaltung GmbH & Co. KG, 81739 München (DE)
(72) Inventor: Lederer, Thomas, 82211 Herrsching (DE); Tsiatsikas, Zisis, 55534 Thessaloniki (GR)
(74) Representative: Schaafhausen, Anne

(57) **Abstract**

The invention relates to a method and a system for eliminating digital signing delays in online conferences. The present invention provides the integration of the digital signature concept into online conferences. According to the invention, during a conference, a set of people is considered which want to agree on an idea or a document that is distributed via screen sharing. After having the agreement of all the people in the conference, it is possible to automatically sign the document either independently or using a digital ring signature.

## Description

The present invention relates to a method and a system for eliminating digital signing delays in online conferences.

Online conferences, also known as virtual conferences or webinars, have become increasingly popular due to advancements in technology and the need for remote collaboration. These events leverage digital platforms and the internet to bring together participants from different locations to share information, discuss topics, and engage in various activities. Online conferences typically use dedicated platforms or software designed for virtual events. These platforms often provide features such as video streaming, live chat, screen sharing, breakout sessions, and interactive elements to facilitate engagement. Speakers and presenters can deliver their content through live video streams, pre-recorded videos, or a combination of both. Presentation materials, such as slides or documents, can be shared with the audience in real-time. Many online conferences strive to replicate the interactive aspects of in-person events. Online conferences enable a global audience to participate without the need for travel. This broadens the reach of the event and allows individuals from different time zones and locations to attend.

Digital signatures play a crucial role in online conferences by providing a secure and verifiable method for authenticating users, signing documents, and ensuring the integrity of communications. So far, digital signatures are used in the context of online conferences for authentication of participants during the registration and login processes. This helps verify the identity of attendees, ensuring that only authorized individuals can access the conference platform. Also, digital signatures are used for document signing as online conferences often involve the exchange of digital documents such as contracts, agreements, or attendance sheets. Digital signatures enable participants to sign these documents electronically, ensuring the authenticity of the signatures and the integrity of the documents.

Those types of digital signatures, which use a single private key tied to a single user, work well for most scenarios. However, they lack privacy as they can be traced back to the individual who created and signed them.

Digitally signing of document(s) by every participant of an online conference in the prior art is done by sharing the document, for example via email, digitally signing the document(s) by every participant, and subsequently returning the signed documents from each participant back to the sender. This introduces multiple communications between the sender and the recipients.

Therefore, the present invention is based on the object to overcome the limitations of the state of the art, and to provide a method for eliminating digital signing delays in online conferences.

This object is solved by a method having the features according to claim 1, a corresponding system having the features of claim 10, a program element having the features of claim 11 and a computer-readable medium having the features of claim 12.

Preferred embodiments of the invention are defined in the respective dependent claims.

According to the invention, a method for eliminating digital signing delays in online conferences is provided, the method comprising the steps of starting, by a presenter, an online conference; monitoring, by at least one bot, the discussion of the online conference regarding one or more document(s) of the discussion; collecting, by the at least one bot, consents from the conference participants regarding the one or more document(s) of the discussion; analyzing, by the at least one bot, the responses of the participants regarding the one or more document(s) of the discussion; signing, by the at least one bot, one or more document(s), in case all responses analyzed are positive; sharing, by the at least one bot, the signed one or more document(s); ending the method.

According to a preferred embodiment, the method further comprises repeating the step of collecting, by the at least one bot, consents from the conference participants regarding the one or more document(s) of the discussion, in case the responses analyzed are not all positive.

According to another preferred embodiment, the method further comprises requesting, by the at least one bot, approval from each participant for signing the one or more document(s), after the step of analyzing the responses of the participants.

According to another preferred embodiment, the step of signing the one or more document(s) is performed independently for the participants and/or using a ring signature.

According to yet another preferred embodiment, the step of signing the one or more document(s) is performed independently for the participants.

According to still another preferred embodiment, the step of signing the one or more document(s) is performed with a ring signature.

According to yet another preferred embodiment, the step of analyzing the responses of the participants is performed using machine learning (ML) and/or artificial intelligence (Al) techniques.

According to still a further preferred embodiment, the ML/Al techniques are selected from Natural Language Processing (NLP) techniques, speech to text techniques and/or pattern recognition techniques.

Further, according to another preferred embodiment, the method further comprises the step of interacting, by the at least one bot, with the respective participant in order to authenticate him/her.

According to yet another preferred embodiment, the step of signing the one or more document(s) is performed for the presenter of the conference or for any other participant of the conference for all participants included in the ring.

According to another preferred embodiment, authentication of the participants is performed using a password, a fingerprint, voice signatures and/or face recognition.

According to another aspect of the present invention, a system for eliminating digital signing delays in online conferences is provided, the system comprising at least one of a bot, wherein the system is configured such that an online conference is monitorable by the at least one bot, and wherein the system is configured to perform the method for eliminating digital signing delays in online conferences.

According to yet another aspect of the present invention, a program element is provided, which when being executed by a processor is adapted to carry out steps of the method for eliminating digital signing delays in online conferences as depicted above.

According to another aspect of the present invention, a computer-readable medium comprising program code is provided, which when being executed by a processor is adapted to carry out steps of the method for eliminating digital signing delays in online conferences as depicted above.

A computer-readable medium may be a floppy disk, a hard disk, an USB (Universal Serial Bus) storage device, a RAM (Random Access Memory), a ROM (Read Only Memory) or an EPROM (Erasable Programmable Read Only Memory). A computer readable medium may also be a data communication network, e. g. the Internet, which may allow downloading a program code.

The present invention provides the integration of the digital signature concept into online conferences. According to the invention, during a conference, a set of people is considered which want to agree on an idea or a document that is distributed privately to the participants or via screen sharing. After having the agreement of all the people in the conference, it is possible to automatically sign the document either independently or using a digital ring signature. This is done by the bot which coordinates the actions as described further below. The bot can either operate autonomously or ask the participant(s) for verification by entering a password, for example. Thus, the redundant reactive communications of the state of the art, in which a party requests a signature from every participant with the respective delays due to sending the signed document back and forth to complete the task is avoided.

The terms "online conference", "meeting" and "conference" are used interchangeably throughout the present description to refer to an online conference as depicted above.

The terms "participant", "party" and "user" are used interchangeably throughout the present description to refer to a participant of an online conference.

In the meaning of the present invention, the term "digital signature" refers to a signature in electronic form in contrast to handwritten signatures. Digital signatures are used to verify the authenticity and integrity of digital messages, documents, or transactions. Thus, digital signatures can for example be used to authenticate the identity of participants in online conferences. When a participant digitally signs their registration or login credentials, it provides a secure way to verify that the person attending the conference is indeed the one they claim to be. Another example is document signatures. Online conferences often involve sharing and signing electronic documents such as contracts, agreements, or attendance sheets. Participants can use digital signatures to sign these documents securely, ensuring that the document has not been altered and that the signature is genuine. Another approach to use digital signatures is a secure communication by applying them to messages or communications within online conference platforms. This helps in verifying that the messages come from the claimed sender and that the content has not been modified during transmission.

In the meaning of the present invention, the term "ring signature" refers to a cryptographic concept that allows a user to sign a message on behalf of a group (or "ring") of users in such a way that the verifier cannot determine which specific member of the group signed the message. The idea is to provide a level of anonymity and unlinkability for the signer within the group. The process of ring signatures is structured in various steps.

### 1. Key Generation:

In a ring signature scheme, a group of potential signers is created, as already mentioned above, a so-called ring. Each member of said ring generates their public-private key pair. These public keys are made available to the public, while the private keys are kept secret.

### 2. Creating a signature:

When a user wants to create a ring signature, they choose a random set of public keys from other members of the ring, including their own public key. This set of public keys forms the "ring." Using the selected public keys, the user then signs the message using their private key. This step ensures that the signature is valid for one of the public keys in the ring, but it doesn't reveal which one.

### 3. Verifying the signature:

Anyone can verify the signature using the message, the signature, and the public keys in the ring. To verify a ring signature, the verifier needs to know the set of public keys that were used to create the signature. The verifier can then check if the signature is valid by using the cryptographic algorithms employed in the ring signature scheme. The verification step confirms that the signature is valid for at least one of the public keys in the ring but doesn't identify which one.

In the meaning of the present invention, the term "bot" refers to a software application that runs tasks on the internet. The bot may keep track of the context of an online conference, which may be done by converting speech to text, and/or by summarizing and analyzing a text with NLP techniques. A bot can also monitor the context of documents that is shared by performing pattern recognition on the shared document snapshot for example using Convolutional neural networks (CNNs).

In the meaning of the present invention, the term "document" refers to a text document or a verbal discussion. If the document is a text document that is shared during the conference, said text document can get signed by the participants as outlined above. If the document is a verbal discussion in the conference, the arguments of the discussion need to be materialized in order to get signed. In the latter case, ML may create a meaningful text document from the statements that is going to be reviewed by the participants and said text document can get signed with the inventive method as outlined above and below.

In the meaning of the present invention, the step of signing the document is performed by the at least one bot which analyses the responses of the participants and decides how to sign for each participant. The bot may initiate the process of signing for each participant individually and may use an additional step of requesting approval from each participant. For example, a popup-window may be used that asks a pin or password to make use of the specified user's certificate in the signing process. In case of a ring signature, it may be configured for each setting that only certain users, or everyone could generate a ring signature. Thus, users which cannot perform a ring signature may be excluded.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed. In addition, features relating to one of the embodiments may be combined with other features of another embodiment, the drawings, or the claims, where possible. The invention and embodiments thereof will be described below in further detail in connection with the drawing(s).

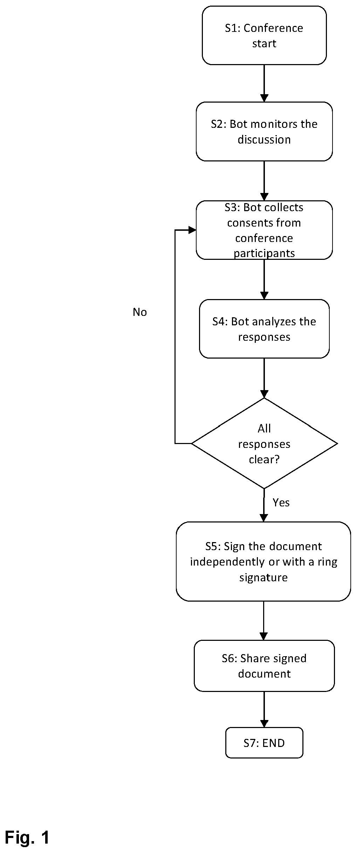

Fig. 1 shows a flowchart of the method for eliminating digital signing delays in online conferences depicting the steps of said method according to an embodiment of the invention. In the first step, the online conference is started by the presenter. The discussion of said conference may be monitored by at least one bot in step S2. During the conference it may become necessary to agree on a document or on a statement by all participants of said conference. Thus, a user may explicitly state that there is a need for an agreement on one or more document(s). Alternatively, a button may be provided at the front end of the conference application, which signals to all participants that an agreement is needed. In step S3, the bot collects the stream/transcripts from every participant with regard to the document(s) in question. Thus, the bot may create a document out of the verbal statements of the participants by summarizing the context on which the participants have agreed. Further, the bot may initiate the tools for signing without introducing any effort to the users. Additionally, the bot may authenticate the users for the signature as described above. In step S4, said transcripts are analyzed by the bot using M L/Al techniques to verify the consensus. For example, a statement "I agree" or "I consent" may be analyzed by the bot to identify that the user has agreed on a statement or document which is shared on the screen.

In case the bot identifies that not all participants have given their consent to the document(s), it may repeat steps S3 and S4 until all participants have given positive responses.

The conversation of the conference is monitored by the at least one bot in order to analyze the responses of the participants. The collection of the responses may be used in different ways depending on the context and the setting of the conference. For example, it may be that only some of the users which correspond to the top management have to agree on something. If this is the case, the bot may allow one of the responsible users to generate a ring signature. In step S5, the document(s) is/are signed in case all responses collected by the bot are positive. This step may be performed either individually for the participants, or with a ring signature.

In case of signing for every participant individually, each user holds their own public and private keys and may sign the document(s) separately. Thus, each participant is asked by the presenter if he/she agrees on the document(s) that is/are screen-shared or distributed among the participants by privately conveying to each participant (i.e. without screen sharing) during the conference. For every consent, the bot may interact with the respective user in order to authenticate him/her. This may be performed directly using a system Application Programming Interface (API) call, used from the conference application. Other well-known authentication mechanisms include a password, a fingerprint, voice signatures or face recognition.

In case of a ring signature, every participant of the conference holds again private and public keys, but their public keys form a ring. Again, the bot analyzes the responses of each participant about the one or more document(s) shared in the conference to ensure that all participants agree. If all responses are positive, either the presenter of the conference may sign the document(s) for all the participants included in the ring, or any other user of the conference may sign the document(s). Again, the participants are authenticated as described above for the independent signing.

Using ring signatures, it is not necessary to collect each independent signature of the different participants. Further, it is not possible to reveal who signed the document(s).

In step S6, the signed document(s) is/are shared, and in step S7 the method ends.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- S1 - S7: steps of the method of the present invention

## Claims

1. A method for eliminating digital signing delays in online conferences, wherein the method comprises the steps of:
- S1 starting, by a presenter, an online conference;
- S2 monitoring, by at least one bot, the discussion in the online conference regarding one or more document(s) of the discussion;
- S3 collecting, by the at least one bot, consents from the conference participants regarding the one or more document(s) of the discussion;
- S4 analyzing, by the at least one bot, the responses of the participants regarding the one or more document(s) of the discussion;
- S5 signing, by the at least one bot, one or more document(s), in case all responses analyzed in step S4 are positive;
- S6 sharing, by the at least one bot, the signed one or more document(s);
- S7 ending the method.

2. The method according to claim 1, wherein the method further comprises:
- repeating step S3 in case the responses analyzed in step S4 are not all positive.

3. The method according to claim 1 or 2, wherein the method further comprises:
- S4A requesting, by the at least one bot, approval from each participant for signing the one or more document(s).

4. The method according to claim 1, wherein the step of signing the one or more document(s) is performed independently for the participants.

5. The method according to claim 1, wherein the step of signing the one or more document(s) is performed with a ring signature.

6. The method according to any one of the preceding claims, wherein the step of analyzing the responses of the participants is performed using machine learning, ML, and/or artificial intelligence, Al, techniques.

7. The method according to claim 6, wherein the ML/Al techniques are selected from Natural Language Processing, NLP, techniques, speech to text techniques and/or pattern recognition techniques.

8. The method according to any one of the preceding claims, wherein the method further comprises interacting, by the at least one bot, with the respective participant in order to authenticate him/her.

9. The method according to claim 5, wherein the method further comprises:
- signing, for the presenter of the conference, the one or more document(s) for all participants included in the ring, or
- signing, for any other participant, the one or more document(s) for all participants included in the ring.

10. The method according to any one of the preceding claims, wherein authentication of the participants is performed by using a password, a fingerprint, voice signatures and/or face recognition.

11. A system for eliminating digital signing delays in online conferences, wherein the system
- comprises at least one of a bot,
- is configured such that an online conference is monitorable by the at least one bot, and
wherein the system is configured to perform the method for eliminating digital signing delays in online conferences according to any one of the claims 1 to 10.

12. A program element, which, when being executed by a processor, is adapted to carry out steps of the method for eliminating digital signing delays in online conferences according to any one of the claims 1 to 10.

13. A computer-readable medium comprising a program code, which, when being executed by a processor, is adapted to carry out anyone of the steps of the method for eliminating digital signing delays in online conferences according to any one of the claims 1 to 10.
